# EUROPÄISCHE PATENTANMELDUNG

(11) **EP 4 122 752 A1**
(43) Veröffentlichungstag der Anmeldung: **25.01.2023**
(21) Anmeldenummer: 22401016.5
(22) Anmeldetag: 11.07.2022
(51) Int. Cl.: B60L 53/51, B60L 53/62, B60L 53/64

(54) **VERFAHREN ZUR LADESTEUERUNG EINES ELEKTROFAHRZEUGES**

(30) Priorität: 23.07.2021 DE 102021119134; 07.07.2022 DE 102022117028
(71) Anmelder: SIGMA Gesellschaft für Systementwicklung und Datenverarbeitung mbH, 09128 Chemnitz (DE)
(72) Erfinder: Pyritz, Frank, 08371 Glauchau (DE)
(74) Vertreter: Rumrich, Gabriele

(57) **Zusammenfassung**

Die Erfindung betrifft ein Verfahren zur Ladesteuerung eines Elektrofahrzeuges, insbesondere zum kostenoptimierten Laden einer Energiespeichereinrichtung eines Elektrofahrzeuges mit regenerativer Energie, aufweisend eine regenerative Energieerzeugungsanlage, eine Ladevorrichtung zum Laden der Energiespeichereinrichtung des Elektrofahrzeugs, eine zentrale Recheneinheit mit einem Datenspeicher und einer Netzwerkschnittstelle, wobei die Ladevorrichtung mittels der Recheneinheit gesteuert wird, wobei die Recheneinheit mittels einer, in einem Elektrofahrzeug angeordneten Ausleseeinheit Fahrzeugdaten in Form des Kilometerstands, des Ladezustands der Energiespeichereinrichtung des Elektrofahrzeuges und einer Fahrzeugidentifikationsnummer des Fahrzeugs, Daten der Energieerzeugungsanlage und von einer externen Datenquelle Wettervorhersage-Daten abruft und die Recheneinheit mittels einer künstlichen Intelligenz auf Basis Kl-bezogener Algorithmen und dem empfangenen Datensatz ein wahrscheinliches vorhergesagtes Nutzerverhalten mit einer zu erwartenden Fahrstrecke bei der nächsten Nutzung des Elektrofahrzeuges errechnet derart, dass die Recheneinheit einen Fahrplan für die Nutzung des Elektrofahrzeugs erstellt und dass das Elektrofahrzeug in Abhängigkeit des Ladezustands der Energiespeichereinrichtung, der zu erwartenden Fahrstrecke gemäß des Fahrplans basierend auf den Fahrzeugdaten und der Verfügbarkeit von Strom aus regenerativen Energiequellen geladen oder nicht geladen wird.

## Beschreibung

Die Erfindung betrifft ein Verfahren zur Ladesteuerung eines Elektrofahrzeuges und findet insbesondere für das Laden mittels regenerativer Energien in Selbstversorgung Anwendung.

Aus der Druckschrift DE 10 2012 219 313 A1 ist ein personalisiertes Lademanagement für ein Fahrzeug bekannt. Das Fahrzeug weist eine interne Speichereinrichtung auf, die mittels einer fahrzeuginternen Quelle und einer Quelle außerhalb aufladbar ist. Die Quelle außerhalb liefert ebenfalls regenerative Energie für das Fahrzeug. Das Fahrzeug weist ein Fahrzeugkommunikationsmodul auf, welches Daten senden und empfangen kann. Des Weiteren ist ein Integrationsmodul vorgesehen, das Parameterdaten fahrzeuginterner Energie, Parameterdaten fahrzeuginterner regenerativer Energie, Parameterdaten regenerativer Energie außerhalb des Fahrzeugs, Benutzerparameterdaten und Webbasierte Daten integriert. Eine Benutzerschnittstelleneinrichtung übermittelt Benutzerparameterdaten an das Integrationsmodul. Die Benutzerparameterdaten umfassen eine Priorisierung von Vorzugsparametern zum Aufladen der fahrzeuginternen Energiespeichereinrichtung. Das Integrationsmodul identifiziert eine optimale Energiequelle zum Aufladen des Fahrzeugs auf der Grundlage der Parameterdaten fahrzeuginterner Energie, der Parameterdaten fahrzeuginterner regenerativer Energie, der Parameterdaten regenerativer Energie außerhalb des Fahrzeugs, der Benutzerparameterdaten und von Web-basierten Daten. Die Quelle der Web-basierten Daten können eine Wetterstation, Energieversorgungsunternehmen oder Web-Datendienstanbieter sein. Die Priorisierung kann in Zeitbasiert, Kostenbasiert und nach einem grünen Index unterteilt werden.

In der Druckschrift DE 10 2019 114 590 A1 werden Kraftfahrzeuge mit Elektroantrieb, Systeme und eine Steuerlogik für vorausschauende Ladeplanung und Antriebsstrangsteuerung beschrieben. Dabei werden Fahrzeugdaten erfasst, um ein Fahrzyklusprofil abzuleiten, das durch eine Vorschauroute mit verfügbaren Verkehrs-, Geopositions-, raumbezogenen Daten und Kartendaten definiert ist. Es werden Fahrermodelle mit gesammelten Daten entwickelt, um das Fahrerverhalten zu replizieren und das Fahrzyklusprofil vorherzusagen, einschließlich der vorhergesagten Fahrzeuggeschwindigkeit, des Antriebsdrehmoments und der Gas-/Bremspedalstellungen für eine Vorschauroute.

Die Druckschrift EP 2 975 725 B1 beschreibt ein Programm zum Einstellen eines Ladezeitraums für Elektrofahrzeuge. Gemäß dem Verfahren wird eine Vorhersagemenge an erneuerbarer Energie erfasst sowie Informationen zu einem Benutzungszeitplan eines elektrischen Fahrzeugs und zu der geplanten Fahrstrecke gesammelt. Weitere Informationen die gesammelt werden betreffen den Zustand des elektrischen Fahrzeugs, insbesondere den verbleibenden Batteriestand.

Die Druckschrift WO 2019/1216806 A1 beschreibt ein Verfahren und eine Vorrichtung zur intelligenten Planung, Gestaltung und Steuerung der Ladeinfrastruktur für Elektrofahrzeuge, wobei das Mobilitätsverhalten (einschließlich des Ladezustand) vorhergesagt und die Auslegung und Steuerung der Ladestationen gemeinsam mit anderen Gebäudelasten und dezentralen Energieressourcen wie Photovoltaik und stationären Energiespeichern optimiert werden sollen. Dazu finden stochastische mathematische Modelle und maschinelles Lernen Anwendung.

Des Weiteren werden Wetterdaten, insbesondere Langzeitvorhersage und Kurzzeitvorhersage berücksichtigt.

Jegliche ermittelten Daten werden als Historie-Daten abgelegt, wobei diese Daten verwendet werden, um die Vorhersage sowohl auf lange als auch auf kurze Sicht zu verbessern. Mit steigender Anzahl historischer Daten können die lernenden Algorithmen die Genauigkeit ihrer Vorhersagen verbessern.

Für die Langzeitvorhersage ist ein Langzeitprognosemodul vorgesehen, das die Daten der Historie sowie die Wetterdaten nutzt. Diese Wetterdaten umfassen das Wetter am Standort sowie die mögliche Leistung der Energieerzeugungsanlage. Des Weiteren wird die anliegende elektrische Last der Einrichtung sowie das Verhalten der Einrichtung, beispielsweise die Nachfrage nach Hochgeschwindigkeitsladungen, Ankunftszeit und Abfahrtszeit des Elektrofahrzeugs sowie der durchschnittlicher Ladungsstand bei Ankunft oder eine statistische Verteilung des Ladungsstands bei Ankunft, der durchschnittliche Ladungsstand bei der Abfahrt oder eine statistische Verteilung des Ladungsstands zur Abfahrtszeit, Typ und Größe der Elektrofahrzeugs sowie Marktpreise für das Laden berücksichtigt. Eine Einschätzung von Fahrzeugdaten erfolgt aus der Auswertung von Historiendaten. Die Historie-Daten beziehen sich auf frühere Ladeverhalten und nicht auf Fahrdaten des Fahrzeugs.

Die Druckschrift US 2013/0 211 988 A1 beschreibt ein Verfahren zur Leistungsverfolgung und Leistungsverteilung wobei ein Steuerungscomputer eine Vielzahl von Daten von verteilten Ladestationen und Elektrofahrzeugen erhält, die an ein gemeinsames Stromnetz angeschlossen sind. Die mit dem Fahrzeug ausgetauschten Daten beziehen sich jedoch lediglich auf die Verfügbarkeit der Ladesäulen. Interne Fahrzeugdaten werden nicht übertragen. Die ermittelten und verwendeten Historiendaten werden aus einem Nutzerprofil und dem Nutzerverhalten erstellt.

Ein Verfahren und System zum Aufladen eines Energiespeichers eines mobilen Energieverbrauchers wie zum Beispiel eines Elektrofahrzeugs ist aus der Druckschrift DE 10 2014 213 248 A1 bekannt. Die Energie zum Aufladen des Energiespeichers wird aus einer regenerativen Energieerzeugungsanlage eines privaten Haushalts gewonnen. Mittels des Verfahrens nach D4 wird ein Energiespeicher mit einer Ladeleistung kleiner oder gleich der Einspeiseleistung einer Stromerzeugungsanlage geladen. Der Abgleich der Ladeleistung und Einspeiseleistung erfolgt permanent, wobei die Ladeleistung der Einspeiseleistung nachgeregelt wird.

Aus der Druckschrift EP 2 426 804 A1 ist ein Verfahren zum Laden eines Elektrofahrzeugs bekannt. Das Elektrofahrzeug wird mittels eines Energiespeichers geladen, der seine Energie aus dem Stromnetz bezieht, wobei gemäß dem Verfahren der Anteil der erneuerbaren Energie in dem Energiespeicher geschätzt wird und anhand dessen das Elektrofahrzeug geladen wird. Des Weiteren wird ein Vorhersagezeitraum vorgeschlagen. Bevorzugt wird der Anteil der erneuerbaren Energien auf Grundlage von Wetterdaten und Wettervorhersagen geschätzt.

Aufgabe der Erfindung ist es, ein Verfahren zur Ladesteuerung eines Elektrofahrzeuges zu entwickeln, welches einen einfachen konstruktiven Aufbau aufweist, die Nutzung von Strom aus dem öffentlichen Stromnetz für die Ladung des Elektrofahrzeuges reduziert und benötigte Informationen selbstständig erfasst und auswertet.

Diese Aufgabe wird mit den Merkmalen des ersten Patentanspruchs gelöst.

Vorteilhafte Ausgestaltungen ergeben sich aus den Unteransprüchen.

Das erfindungsgemäße Verfahren zur Ladesteuerung eines Elektrofahrzeuges, insbesondere zum kostenoptimierten Laden einer Energiespeichereinrichtung eines Elektrofahrzeuges mit regenerativer Energie, weist eine regenerative Energieerzeugungsanlage, eine Ladevorrichtung zum Laden der Energiespeichereinrichtung, eine zentrale Recheneinheit mit einem Datenspeicher und einer Netzwerkschnittstelle, wobei die Ladevorrichtung mittels der Recheneinheit gesteuert wird, und eine, in dem Elektrofahrzeug angeordnete Ausleseeinheit auf, wobei die Recheneinheit mittels der Ausleseeinheit Fahrzeugdaten in Form des Kilometerstands, des Ladezustands der Energiespeichereinrichtung des Elektrofahrzeuges und einer Fahrzeugidentifikationsnummer des Fahrzeugs, Daten der Energieerzeugungsanlage und von einer externen Datenquelle Wettervorhersage-Daten abruft und dass auf Basis KI-bezogener Algorithmen und dem empfangenen Datensatz ein wahrscheinliches Nutzerverhalten mit einer zu erwartenden Fahrstrecke bei der nächsten Nutzung des Elektrofahrzeuges errechnet derart, dass die Recheneinheit einen Fahrplan für die Nutzung des Elektrofahrzeugs erstellt wobei das Elektrofahrzeug in Abhängigkeit des Ladezustands der Energiespeichereinrichtung, der zu erwartenden Fahrstrecke gemäß des Fahrplans basierend auf den Fahrzeugdaten und der Verfügbarkeit von Strom aus regenerativen Energiequellen geladen oder nicht geladen wird.

Die Fahrzeugdaten des Elektrofahrzeuges umfassen den Ladezustand der Energiespeichereinrichtung und/ den Kilometer-Stand und eine Fahrzeugidentifikationsnummer. Die Fahrstrecke wird aus der Differenz zweier übermittelter Kilometerstände errechnet. In einer Variante des Verfahrens können auch anderweitige Daten wie Fahrprofile, welche von dem Elektrofahrzeug aufgezeichnet werden, die in den übermittelten Fahrzeugdaten enthalten sein. Die in dem Elektrofahrzeug verwendete Ausleseeinheit ist in einer vorteilhaften Ausgestaltung für eine einfache Handhabung in Form eines drahtlosen OBD2-Steckers ausgebildet. Alternativ kann auch eine direkte Übertragung aus dem Fahrzeug über ein Onlinenetzwerk an die Recheneinheit erfolgen.

Vorteilhafter Weise wird das Nutzerverhalten in einem vorbestimmten Zeitraum erfasst wird. Bevorzugt erfolgt dabei die Bestimmung mittels der Recheneinheit taggenau. Jedoch sind auch anderweitige Zeiteinteilungen denkbar.

In einer vorteilhaften Ausgestaltung wird die regenerativ erzeugte Energie aus der regenerativen Energieerzeugungsanlage in einer hausinternen Speichereinrichtung gespeichert. Mit einer derartigen Ausgestaltung können Überschüsse gespeichert und für eine spätere Verwendung zur Verfügung gestellt werden. Die erzeugte und gespeicherte Energie wird von der Recheneinheit für das Laden des Elektrofahrzeuges berücksichtigt.

Auch der Ladezustand der hausinternen Speichereinrichtung wird von der Recheneinheit überwacht und verarbeitet.

Die Recheneinheit wertet bevorzugt Historiendaten aus, die in die Errechnung des wahrscheinlichen Nutzerverhaltens einfließen, wobei die Historiendaten in einem konfigurierbaren Zeitraum gespeichert werden. Dafür ist in der Recheneinheit die Datenspeichereinrichtung vorgesehen.

Gemäß dem Verfahren wandelt die Energieerzeugungsanlage Windenergie oder Wasserenergie oder Solarenergie in elektrischen Strom um, wobei die Energie mit einem Wechselrichter mit Zähler gemessen und bevorzugt an die Recheneinheit übertragen wird.

In einer vorteilhaften Ausgestaltung des erfindungsgemäßen Verfahrens ist das lokale Stromnetz mittels eines digitalen Stromzählers mit Gateway-Funktion mit dem öffentlichen Stromnetz verbunden. Des Weiteren ist die Recheneinheit mit dem digitalen Stromzähler mit Gateway-Funktion zum Auslesen des aktuellen Stromverbrauchs zum Austausch von Daten verbunden.

Die zentrale Recheneinheit ist bevorzugt in Form eines Embedded PC ausgebildet. Dadurch kann ein kostengünstiger und platzsparender Einsatz gewährleistet werden.

Gemäß dem Verfahren werden vorteilhafter Weise extern bereit gestellte Informationen in Modellen verarbeitet und der Ladesteuerung zum Anlernen zur Verfügung gestellt.

In einer besonders vorteilhaften Ausgestaltung werden mittels einer Cloudanwendung Kl-Modelle aus den gesammelten Daten erzeugt und angelernt.

Die Recheneinheit kann bevorzugt mittels eines Smartphones, Tablet oder PC mit einem Userinterface ansteuerbar sein, wobei eine Parametrisierung und Statusanzeige erfolgen. Über das Userinterface können Nutzereingaben wie beispielsweise konkrete Nutzerdaten, Zeiten, Entfernungen und fahrzeugspezifische Daten ausgetauscht werden

Für eine komfortable Bedienung von außerhalb ist das Smartphone direkt oder über ein Netzwerk/Internet mit der Recheneinheit verbunden. Die Verbindung zwischen dem Smartphone, Tablet oder PC und der Recheneinheit erfolgt mittels einer gesicherten Verbindung über das Internet, oder wenn verfügbar direkt mittels einer drahtlosen Verbindung.

In einer vorteilhaften Ausgestaltung kann der Ladevorgang des Elektrofahrzeuges manuell gestartet werden derart, dass der errechnete Fahrplan und die Vorhersagedaten der Recheneinheit überschreibbar sind. Dies kann beispielsweise für eine einzelne Fahrt oder einen längeren Zeitraum erfolgen. Der Zugriff zum Überschreiben erfolgt dabei über das Userinterface.

Die Erfindung wird nachfolgend an einem Ausführungsbeispiel und zugehörigen Zeichnungen näher erläutert.

Es zeigen:
- Figur 1: eine schematische Darstellung des Verfahrens,
- Figur 2 und 3: eine Tabelle der Fahrzeugdaten und deren Auswertung.

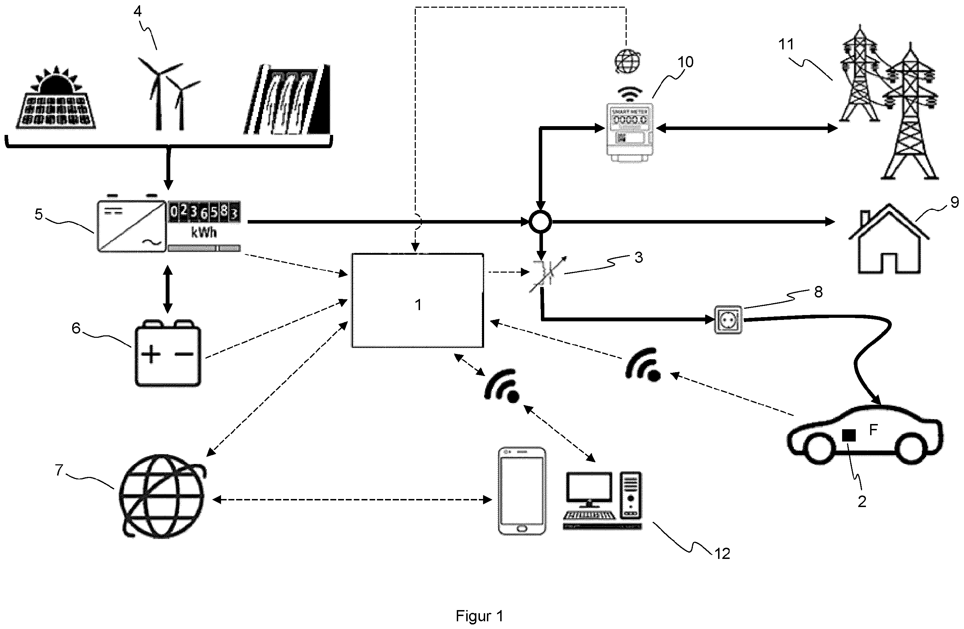

Das Verfahren zur Ladesteuerung eines Elektrofahrzeuges weist gemäß Figur 1 eine zentrale Recheneinheit 1 auf, die bevorzugt als Embedded-PC ausgebildet ist. Gemäß Figur 1 ist der Stromfluss mit durchgängigen schwarzen Linien, der Datenfluss mit gestrichelten Linien dargestellt.

Die Recheneinheit 1 weist einen Datenspeicher und eine künstliche KI auf. Das Elektrofahrzeug F weist eine Ausleseeinheit 2 auf, die bevorzugt kabellos mit der Recheneinheit 1 kommuniziert. Die Ausleseeinheit 2 ist üblicherweise in Form eines OBD2-Steckers ausgebildet und mit dem Bordsystem des Elektrofahrzeugs F kompatibel. Die Kommunikation zwischen der Recheneinheit 1 und der Ausleseeinheit 2 (OBD2-Stecker) erfolgt vorteilhafter Weise mittels Bluetooth oder per WLAN und erfolgt von der Ausleseeinheit 2 zu der Recheneinheit 1. Daraus erhält die Recheneinheit 1 Fahrzeugdaten wie den Kilometer-Stand und den Energiespeicherzustand des Fahrzeugs F.

Mittels der Recheneinheit 1 ist eine Ladevorrichtung 3 steuerbar, wobei der Ladevorgang des Elektrofahrzeuges F in Abhängigkeit des Ladezustands der Energiespeichereinrichtung, einem, durch die Recheneinheit 1 errechneten, wahrscheinlichen Nutzerverhalten und der Verfügbarkeit von Strom aus regenerativen Energieerzeugungsanlage 4 gestartet wird. Als regenerative Energieerzeugungsanlage 4 sind in der Figur 1 Solar-, Wind- und Wasserenergie dargestellt. Die Ladesteuerung 3 beinhaltet auch die Ladeelektrik und ist beispielsweise als Wallbox ausgebildet.

Die regenerative Energieerzeugungsanlage 4 ist mit einem Wechselrichter 5 mit einem Zähler verbunden und einer hausinternen Speichereinrichtung 6 verbunden.

Der Zähler 5 und die hausinterne Speichereinrichtung 6 übermitteln Ladezustand sowie die, über die regenerative Energieerzeugungsanlage 4 verfügbare, Energie beziehungsweise den Ertrag an die Recheneinheit 1.

Zur Errechnung der verfügbaren Energie ist die Recheneinheit 1 mit einer Schnittstelle von einer externen Datenquelle 7 verbunden und kann über diese Schnittstelle Wettervorhersage-Daten abrufen. Die Datenquelle 7 ist über das Internet erreichbar.

In Kombination mit den Daten, welche das Elektrofahrzeug übermittelt, kann so ein Zeitplan für ein Laden aus regenerativen Energien für das Elektrofahrzeug F errechnet werden. Das Elektrofahrzeug F wird über einen Ladeanschluss 8 in Form einer Steckdose oder dem Anschluss an der genannten Wallbox mit der Energie beladen.

Das lokale Stromnetz dient neben dem Laden des Elektrofahrzeugs F der Versorgung des Eigenverbrauchs im Haus 9.

Des Weiteren ist das Stromnetz mittels eines Smart Stromzählers 10 mit zusätzlicher Internetanbindung an das öffentliche Stromnetz 11 angeschlossen. So kann bei einem niedrigen Ladestand der hausinternen Speichereinrichtung 6 sowie mangelnder Energie aus der regenerativen Energieerzeugungsanlage 4 Strom aus dem öffentlichen Stromnetz 11 bezogen oder überschüssiger Strom in dieses eingeleitet werden.

Der Smart Stromzähler 10 ist über das Internet oder ein lokales Netzwerk zusätzlich mit der Recheneinheit 1 verbunden.

Besonders bevorzugt ist die Recheneinheit 1 mittels einer Internetanbindung oder über einen internen Datenkanal mit einem Smartphone, Tablet oder PC koppelbar und über ein Userinterface 12 steuerbar. Über das Userinterface 12 können Nutzereingaben wie beispielsweise konkrete Nutzerdaten, Zeiten, Entfernungen und fahrzeugspezifische Daten ausgetauscht werden.

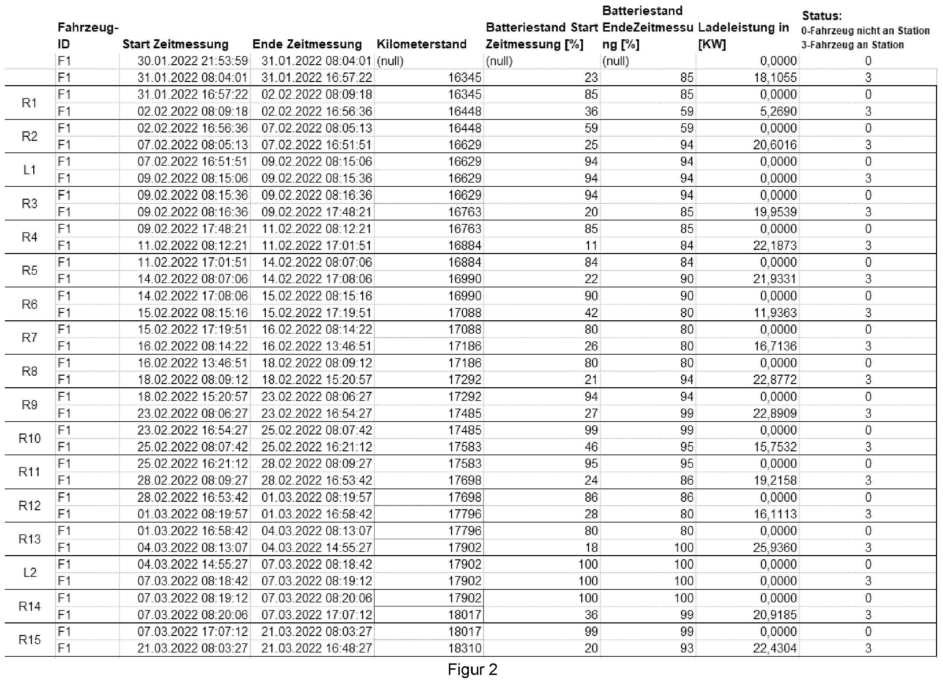

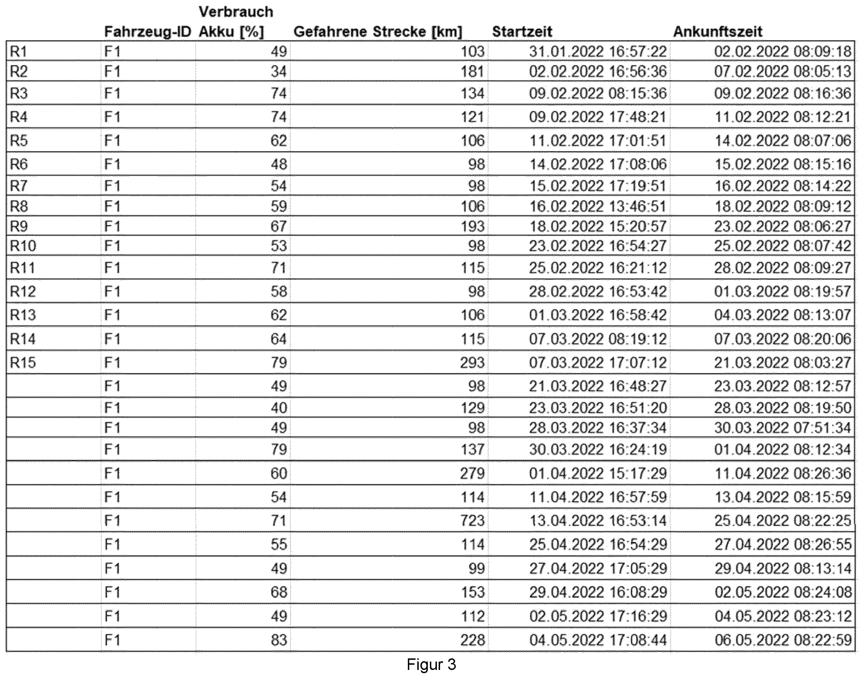

Die Figuren 2 und 3 zeigen in einer Tabelle die vom Fahrzeug übermittelten Fahrzeugdaten (Figur 2) und die daraus errechneten Daten für die Vorhersage des Fahrverhaltens (Figur 3). Die Tabelle betrifft ein einzelnes Fahrzeug mit einer Fahrzeugidentifikationsnummer F1.

Für eine bessere Übersicht wurden die einzelnen zurückgelegten Strecken in Reisestrecken R1 bis R15 unterteilt. Die aus der Tabelle gemäß Figur 2 gewonnenen Informationen bezüglich des Kilometerstands und Batterieladestands nach Beendigung der Fahrt ergeben den zugehörigen Verbrauch des Akkus und die gefahrene Strecke in Figur 3.

Des Weiteren sind in Figur 2 zwei Ladepausen L1 und L2 angegeben, in denen Fahrzeug nicht bewegt wurde. Der Energiespeicher wurde beim Übergang von L1 zu R3 nicht geladen, da das System für die anstehende Fahrt genügend Energie im Energiespeicher erkannt hat.

Das Verfahren zur Ladesteuerung eines Elektrofahrzeuges ist insbesondere für private Haushalte und Unternehmen mit eigenen Lademöglichkeiten vorgesehen und weist eine regenerative Energieerzeugungsanlage, beispielsweise eine Windkraftanlage oder Solaranlage auf, deren erzeugte Energie von der Recheneinheit überwacht wird. Des Weiteren werden von der Recheneinheit Wetterdaten hinzugezogen, die zu erwartende erzeugbare Energie der folgenden Tage berücksichtigt.

Des Weiteren werden von der Recheneinheit mittels der Ausleseeinheit in dem Elektrofahrzeug Fahrzeugdaten in Form des Kilometerstands, des Ladezustands der Energiespeichereinrichtung und einer Fahrzeugidentifikationsnummer des Fahrzeugs erfasst. Die Ausleseeinheit kann in Form eines OBD2-Steckers ausgebildet sein und drahtlos mit der Recheneinheit kommunizieren. Jedoch ist auch eine Kommunikation über Onlinedaten direkt aus dem Fahrzeug möglich.

Mit den erfassten gesamten Dante wird auf Basis KI-bezogener Algorithmen ein wahrscheinliches in einem vorbestimmten Zeitraum vorhergesagtes Nutzerverhalten generiert. Die Erfassung erfolgt vorteilhafter Weise taggenau.

Dazu wird unter Berücksichtigung der Fahrzeugidentifikationsnummer die Differenz zwischen dem zuletzt erfassten Kilometerstand und dem aktuellen Kilometerstand gespeichert und als Fahrstrecke einem Tag der Woche zugewiesen, wobei mittels der KI der Fahrplan über einen festgelegten Zeitraum, beispielsweise eine Woche, einen Monat oder ein Jahr erstellt wird.

Mit den ermittelten Daten erfolgt ein Abgleich der anstehenden Fahrstrecke, des benötigten Energiebedarfs für die Fahrt und der zur Verfügung stehenden Energie aus regenerativen Energien. Aus den ermittelten Daten kann ein Energieverbrauch für die zu fahrende Strecke vorausberechnet werden. Daraus ergibt sich beispielsweise gemäß dem erstellten Fahrplan an einem Dienstag eine zu erwartende Fahrstrecke von 20 Kilometern. Sofern ausreichend regenerative Energie vorhanden oder zu erwarten ist, wird der Ladevorgang von der Recheneinheit an die Ladevorrichtung freigegeben. Das Elektrofahrzeug wird vollständig geladen.

Sollte nicht ausreichend regenerative Energie vorhanden sein, der Ladestand der Energiespeichereinrichtung des Elektrofahrzeugs jedoch für die zu erwartende Fahrstrecke von 20 Kilometern genügen, wird der Ladevorgang nicht freigeben. Das Elektrofahrzeug wird nicht geladen. Ebenfalls denkbar wäre, dass das Fahrzeug, sofern nicht genügend regenerative Energie zu erwarten ist, nur bis zu einem bestimmten Ladestand der Energiespeichereinrichtung geladen wird, so dass die zu erwarten Fahrstrecke fahrbar ist.

Ist an dem darauffolgenden Mittwoch ebenfalls eine Fahrt mit einer anderen Fahrstrecke, beispielsweise 100 Kilometer zu erwarten, wird auf Basis der vorhandenen Energie das Fahrzeug geladen oder nicht geladen.

Sollte eine nicht zu erwartende Fahrt bevorstehen, kann die Ladesteuerung einmalig mittels eines geeigneten Interfaces überschrieben werden und ein sofortiges Laden gestartet werden.

Bevorzugt wird der Verbrach des Hauses ebenfalls berücksichtigt. So kann so wenig Strom wie möglich aus dem öffentlichen Netz entnommen werden. Des Weiteren werden durch Auswertung der reinen Kilometerstände keine Informationen des Navigationssystems benötigt oder erfasst.

Mit der vorliegenden Erfindung kann eine intelligente selbstlernende Ladesteuerung eines Elektrofahrzeugs mit einem Energiespeicher bereitgestellt werden, bei der der Nutzer des Fahrzeugs keine weiteren Anpassungen und Einstellungen für sein Nutzerverhalten hinterlegen muss. Das Verfahren erkennt über die künstliche Intelligenz, wann das Elektrofahrzeug für welche Fahrstrecke benötigt wird und lädt das Fahrzeug entsprechend der verfügbaren Energie und Fahrstrecke auf. Dabei kann zusätzlich zwischen dem Energiebedarf im Winter und im Sommer unterschieden werden.

### Bezugszeichenliste

- 1: Recheneinheit
- 2: Ausleseeinheit
- 3: Ladevorrichtung
- 4: Regenerative Energieerzeugungsanlage
- 5: Wechselrichter
- 6: Hausinterne Speichereinrichtung
- 7: Externe Datenquelle/Internet
- 8: Ladeanschluss
- 9: Haus
- 10: Smart Stromzähler
- 11: Öffentliches Stromnetz
- 12: Userinterface

- F: Elektrofahrzeug

## Patentansprüche

1. Verfahren zur Ladesteuerung eines Elektrofahrzeuges, insbesondere zum kostenoptimierten Laden einer Energiespeichereinrichtung eines Elektrofahrzeuges mit regenerativer Energie, aufweisend eine regenerative Energieerzeugungsanlage, eine Ladevorrichtung zum Laden der Energiespeichereinrichtung des Elektrofahrzeugs, eine zentrale Recheneinheit mit einem Datenspeicher und einer Netzwerkschnittstelle, wobei die Ladevorrichtung mittels der Recheneinheit gesteuert wird, **dadurch gekennzeichnet, dass** die Recheneinheit mittels einer, in dem Elektrofahrzeug angeordneten Ausleseeinheit Fahrzeugdaten in Form des Kilometerstands, des Ladezustands der Energiespeichereinrichtung des Elektrofahrzeuges und einer Fahrzeugidentifikationsnummer des Fahrzeugs, Daten der Energieerzeugungsanlage und von einer externen Datenquelle Wettervorhersage-Daten abruft und dass die Recheneinheit mittels einer künstlichen Intelligenz auf Basis KI-bezogener Algorithmen und dem empfangenen Datensatz ein wahrscheinliches Nutzerverhalten mit einer zu erwartenden Fahrstrecke bei der nächsten Nutzung des Elektrofahrzeuges errechnet derart, dass die Recheneinheit einen Fahrplan für die Nutzung des Elektrofahrzeugs erstellt und dass das Elektrofahrzeug in Abhängigkeit des Ladezustands der Energiespeichereinrichtung, der zu erwartenden Fahrstrecke gemäß des Fahrplans basierend auf den Fahrzeugdaten und der Verfügbarkeit von Strom aus regenerativen Energiequellen geladen oder nicht geladen wird.

2. Verfahren nach Anspruch 1, **dadurch gekennzeichnet, dass** die Fahrstrecke aus der Differenz zweier übermittelter Kilometerstände errechnet wird.

3. Verfahren nach Anspruch 1 oder 2, **dadurch gekennzeichnet, dass** das Nutzerverhalten in einem vorbestimmten Zeitraum erfasst wird.

4. Verfahren nach Anspruch 3, **dadurch gekennzeichnet, dass** das Nutzerverhalten taggenau von der Recheneinheit bestimmt wird.

5. Verfahren nach einem der Ansprüche 1 bis 4, **dadurch gekennzeichnet, dass** die erzeugte Energie in einer hausinternen Speichereinrichtung gespeichert wird und dass die gespeicherte Energie der Speichereinrichtung von der Recheneinheit für das Laden des Elektrofahrzeuges berücksichtigt wird.

6. Verfahren nach einem der Ansprüche 1 bis 5, **dadurch gekennzeichnet, dass** die Recheneinheit Historiendaten auswertet und in die Errechnung des wahrscheinlichen Nutzerverhaltens einfügt, wobei die Historiendaten in einem konfigurierbaren Zeitraum gespeichert werden.

7. Verfahren nach einem der Ansprüche 1 bis 6, **dadurch gekennzeichnet, dass** die Energieerzeugungsanlage Windenergie oder Wasserenergie oder Solarenergie in elektrischen Strom umwandelt, wobei die Energie mit einem Wechselrichter mit Zähler gemessen und an die Recheneinheit übertragen wird.

8. Verfahren nach einem der Ansprüche 1 bis 7, **dadurch gekennzeichnet, dass** das lokale Stromnetz mittels eines digitalen Stromzählers mit Gateway-Funktion mit dem öffentlichen Stromnetz verbunden ist und dass die Recheneinheit mit dem digitalen Stromzähler mit Gateway-Funktion zum Auslesen des aktuellen Stromverbrauchs kommuniziert.

9. Verfahren nach einem der Ansprüche 1 bis 8, **dadurch gekennzeichnet, dass** extern bereit gestellte Informationen in Modellen verarbeitet werden und der Ladesteuerung zum Anlernen zur Verfügung gestellt werden.

10. Verfahren nach einem der Ansprüche 1 bis 9, **dadurch gekennzeichnet, dass** mittels einer Cloudanwendung KI-Modelle aus den gesammelten Daten angelernt werden.

11. Verfahren nach einem der Ansprüche 1 bis 10, **dadurch gekennzeichnet, dass** die Ausleseeinheit drahtlos mit der Recheneinheit kommuniziert.

12. Verfahren nach Anspruch 11, **dadurch gekennzeichnet, dass** die Ausleseeinheit ein drahtloser OBD2-Stecker ist.

13. Verfahren nach Anspruch 11, **dadurch gekennzeichnet, dass** die Ausleseeinheit in das Fahrzeug integriert ist und online Fahrzeugdaten an die Recheneinheit übermittelt.

14. Verfahren nach einem der Ansprüche 1 bis 13, **dadurch gekennzeichnet, dass** mittels eines Smartphones, Tablet oder PC mit Userinterface eine Parametrisierung und Statusanzeige erfolgen.

15. Verfahren nach Anspruch 14, **dadurch gekennzeichnet, dass** das Smartphone direkt oder über ein Netzwerk/Internet mit der Recheneinheit verbunden ist.

16. Verfahren nach einem der Ansprüche 1 bis 15, **dadurch gekennzeichnet, dass** der Ladevorgang des Elektrofahrzeuges manuell gestartet werden kann derart, dass der errechnete Fahrplan der Recheneinheit überschrieben wird.
